# EUROPÄISCHE PATENTSCHRIFT

(11) **EP 3 403 057 B1**
(45) Veröffentlichungstag und Bekanntmachung des Hinweises auf die Patenterteilung: **07.06.2023**
(21) Anmeldenummer: 16812676.1
(22) Anmeldetag: 15.12.2016
(51) Int. Cl.: G01F 1/66, G01F 1/667

(54) **ULTRASCHALLFLUIDZÄHLER SOWIE VERFAHREN ZUR DURCHFLUSS- UND/ODER VOLUMENBESTIMMUNG EINES STRÖMENDEN MEDIUMS**
ULTRASONIC FLUID METER AND METHOD FOR DETERMINING THE FLOW RATE AND/OR VOLUME OF A FLOWING MEDIUM
COMPTEUR DE FLUIDE À ULTRASONS ET PROCÉDÉ DE DÉTERMINATION DE DÉBIT ET/OU DE VOLUME D'UN MILIEU EN ÉCOULEMENT

(30) Priorität: 14.01.2016 DE 102016000267; 20.05.2016 DE 102016006244
(43) Veröffentlichungstag der Anmeldung: 21.11.2018
(73) Patentinhaber: Diehl Metering GmbH, 91522 Ansbach (DE)
(72) Erfinder: KROEMER, Harald, 91522 Ansbach (DE); ÖFELEIN, Wilhelm, 91522 Ansbach (DE); BAER, Malte, 90478 Nürnberg (DE)
(74) Vertreter: Diehl Patentabteilung
(86) Internationale Anmeldenummer: PCT/EP2016/002110
(87) Internationale Veröffentlichungsnummer: WO 2017/121443

(56) Entgegenhaltungen:
- EP-A1- 0 012 058
- WO-A1-2009/074162
- DE-A1- 4 118 809
- DE-A1- 4 232 526
- US-A- 5 546 813
- US-A1- 2007 220 995
- US-A1- 2008 098 824
- US-A1- 2010 005 901
- US-A1- 2010 299 088
- US-A1- 2013 239 698
- US-A1- 2015 268 077

## Beschreibung

Die vorliegende Erfindung betrifft einen Ultraschallfluidzähler zur Durchfluss- und/oder Volumenbestimmung eines strömenden Mediums gemäß dem Oberbegriff des Anspruchs 1 und ein Verfahren zur Durchfluss- und/oder Volumenbestimmung eines strömenden Mediums.

Ultraschallfluidzähler werden üblicherweise dazu verwendet, Verbrauchsmengen von Fluid in einem Fluidversorgungsnetzwerk zu ermitteln. Ultraschallfluidzähler werden in der Regel zur Durchfluss-, Volumen- oder Wärmemengenbestimmung von Fluiden, wie zum Beispiel Wasser, eingesetzt.

### Technologischer Hintergrund

Der häufigste Anwendungsbereich von Ultraschallfluidzählern sind Wasserzähler zur Ermittlung des Trinkwasserverbrauchs in Gebäuden sowie Haushalten oder Wärmemengenzähler zur Ermittlung der verbrauchten Wärmeenergie. Derartige Ultraschallfluidzähler besitzen in der Regel ein Gehäuse mit einem Einlass und einem Auslass. Mittels des Gehäuses kann der Ultraschallfluidzähler in ein Fluidleitungsnetz, wie z. B. eine Trinkwasserversorgung, installiert werden. Die Strömungsrichtung des Fluids innerhalb des Ultraschallfluidzählers kann vom Einlass zum Auslass unverändert sein oder sich je nach Konstruktion des Ultraschallfluidzählers auch ändern.

Die Funktionsweise eines Ultraschallfluidzählers basiert auf dem Einsatz von Ultraschallwandlern insbesondere auf piezoelektrischer Basis, die im Bereich des Gehäuses des Ultraschallfluidzählers angebracht werden. Hierbei bilden immer zwei Ultraschallwandler ein Ultraschallwandlerpaar, wobei sich zwischen den beiden Ultraschallwandlern des Ultraschallwandlerpaars eine Ultraschallmessstrecke befindet. Entlang der Ultraschallmessstrecke können Ultraschallsignale, sogenannte Ultraschallbursts, von den Ultraschallwandlern gesendet und empfangen werden. Die Ultraschallmessstrecke kann hierbei unterschiedlichste Formen aufweisen. Sie kann zum Beispiel geradlinig, gekrümmt, U-förmig oder aufgrund von Mehrfachumlenkungen zackenlinienförmig sein. Die von den Ultraschallwandlern erzeugte Schallausbreitung verteilt sich auf räumlich gegliederte Schallkeulen unterschiedlicher Intensität. Neben einer axialen Hauptschallkeule können sich nicht vermeidbare, Ultraschallwandler-spezifische Nebenschallkeulen bilden.

Die Durchfluss- und/oder Volumenbestimmung eines durchströmenden Mediums mittels eines Ultraschallwandlers erfolgt anhand einer Laufzeitdifferenzmessung der Ultraschallsignale. Die Laufzeitdifferenz wird dadurch bestimmt, dass zunächst ein Ultraschallsignal von einem ersten Ultraschallwandler des Ultraschallwandlerpaares zu einem zweiten Ultraschallwandler des Ultraschallwandlerpaares entlang der Ultraschallmessstrecke in Strömungsrichtung gesendet wird. Anschließend wird ein Ultraschallsignal vom zweiten Ultraschallwandler entlang der Ultraschallmessstrecke entgegengesetzt der Strömungsrichtung hin zum ersten Ultraschallwandler gesendet. Die Übertragung des Ultraschallsignals von einem Ultraschallwandler zum anderen Ultraschallwandler entlang der Ultraschallmessstrecke erfolgt in Strömungsrichtung des Mediums schneller als entgegengesetzt der Strömungsrichtung des Mediums. Diese zeitliche Differenz der Übertragungsdauer der beiden Ultraschallsignale wird als Laufzeitunterschied oder Laufzeitdifferenz der Ultraschallsignale bezeichnet. Anhand dieses Laufzeitunterschieds und der im Vorfeld bekannten Dimension des Ultraschallfluidzählers bzw. der Ultraschallmessstrecke kann der Durchfluss oder auch das Volumen des durchströmenden Mediums bestimmt werden.

In vorteilhafter Weise werden auch Ultraschallfluidzähler eingesetzt, die das Messprinzip der Diagonaldurchschallung mit zwei oder mehreren Ultraschallmessstrecken einsetzen. Aus den Messwerten der einzelnen Ultraschallmessstrecken können Mittelwerte gebildet werden, um ein genaueres Messergebnis zu erzielen. In der Regel werden die Ultraschallwandler bei mehreren Ultraschallmessstrecken parallel bzw. spiegelsymmetrisch in das Gehäuse des Ultraschallfluidzählers eingesetzt, wodurch parallel verlaufende Ultraschallmessstrecken entstehen. Daraus ergeben sich konstruktive Vorteile, da zum Beispiel die Kabelführung oder die Gehäusebearbeitung einfach umsetzbar ist. Messtechnisch kann es allerdings in Fragen der Ultraschallakustik sowie der Strömungsführung zu diversen Problemen kommen, wie z. B. das Nichtvermessen der maximalen Strömungsgeschwindigkeit im Zentrum der Strömung, eine ungenauere Mittelwertbildung der Ultraschallsignale und/oder ein akustisches Übersprechen der parallelen Ultraschallmessstrecken bzw. der Ultraschallsignale der Ultraschallwandlerpaare.

### Druckschriftlicher Stand der Technik

Die EP 2 310 808 B1 beschreibt ein Verfahren zur Koordination eines Messsystems eines Ultraschalldurchflussmessers. Der Ultraschalldurchflussmesser besitzt mehrere Ultraschallwandlerpaare mit dazugehörigen Ultraschallmessstrecken. Die Ultraschallwandler sind innerhalb größerer Ausnehmungen angeordnet. Die Ultraschallmessstrecken sind von der Oberseite des Ultraschalldurchflussmessers aus betrachtet X-förmig im Gehäuse des Ultraschalldurchflussmessers untergebracht, wodurch in der Projektionsebene des Durchflussquerschnitts betrachtet mehrere parallele Ultraschallmessstrecken angeordnet sind. Durch einen derartigen Aufbau kann es zur Nichtvermessung der maximalen Strömungsgeschwindigkeit im Zentrum der Strömung bzw. des Gehäuses kommen, da je nach Geometrie und Anordnung der Ultraschallwandler immer Bereiche im Zentrum der Strömung existieren, die nicht innerhalb einer der Ultraschallmessstrecken liegen und somit nicht erfasst werden. Hierdurch resultiert eine ungenaue Mittelwertbildung, insbesondere bei einem Wechsel zwischen laminarer und turbulenter Durchströmung des Mediums. Ferner ist ein akustisches Übersprechen der einzelnen Ultraschallsignale aufgrund der nah beieinander positionierten Ultraschallmessstrecken sehr wahrscheinlich. Durch ein akustisches Übersprechen wird einerseits die Empfangsamplitude beschnitten, andererseits kann eine resultierende Phasenverschiebung der addierten Einzelsignale Messfehler bei der Laufzeitdifferenz hervorrufen.

Ein weiterer Nachteil der zeigt sich in der Gewichtung der einzelnen Ultraschallmessstrecken. Die Ultraschallmessstrecken müssen aufgrund von Strömungsunterschieden im Zuge der anschließenden Durchflussberechnung mehr oder weniger gewichtet werden, je nachdem wie weit die jeweilige Ultraschallmessstrecke von der Querschnittsmitte des Gehäuses entfernt ist. Hierbei müssen unterschiedliche Kennfelder für die einzelnen Ultraschallmessstrecken erstellt werden, um einen exakten Durchfluss bestimmen zu können. Dadurch wird die Durchflussberechnung erschwert und fehleranfällig. Ebenso kann es aufgrund der größeren Ausnehmungen zu Verwirbelungen sowie Luftblasen- und Hohlraumbildungen kommen, die das Messergebnis negativ beeinflussen. Zudem ergibt sich ein konstruktiver und kostenintensiver Nachteil aufgrund des Einsatzes einer Vielzahl von Ultraschallwandlern.

Die US 2007/220995 A1 beschreibt den Aufbau eines Ultraschall-Durchflussmessers, wobei die Durchflussgeschwindigkeit eines Fluids durch ein Rohr wahlweise mittels einer Laufzeitmessung oder mittels des Dopplerverfahrens möglich ist. Zum Zwecke einer Laufzeitmessung sind Paare von Transducern vorgesehen, von denen der eine ein Ultraschallsignal in das Fluid einkoppelt und der andere empfängt und umgekehrt. Beim Dopplerverfahren genügt eine einzige Einheit. Gemäß einer Ausführungsform ist ein entsprechender Doppler-Sender versetzt zu einem Transducer aus dem Paar für die Laufzeitmessung vorgesehen, aber an derselben Umfangswinkelstellung. Das Dokument beschreibt des Weiteren, dass anstelle eines einzigen Paares von Transducern für die Laufzeitmessung auch zwei oder drei Paare verwendet werden können. In der Projektion auf einen Schnitt würden sich die einzelnen Messpfade schneiden. Das Dokument macht keine Aussage bezüglich der Messpfade längs des Rohrs.

Aus der US 2013/239698 A1 ist eine Durchflussmessanordnung bekannt, bei der mehrere Transducerpaare einzelne Messpfade definieren, wobei sich diese Messpfade bei einer Ausführungsform an einer Stelle in der Mitte des Rohrs, durch welches das Fluid fließt, schneiden. Eine Mehrzahl von Messpfaden ist deswegen vorgesehen, damit die Genauigkeit erhöht werden kann. Insbesondere ist beschrieben, dass die Vorrichtung zuverlässig weiterarbeitet, sollte einer der Transducer ausfallen.

Das US-Patent 5,546,813 A offenbart ein Gerät zum Bestimmen des Fluidflusses. Hier können ebenfalls Transducerpaare vorgesehen sein, die in einer Projektion auf einen Durchflussquerschnitt äquidistant über den Mantel des Rohrs verteilt wirken. Das Patent macht keine Aussage zur Art der Nutzung und verweist auf komplexe Rechenverfahren in einem technischen Bericht.

Aus der US 2010/299088 A1 ist eine Ultraschallflussmessvorrichtung bekannt, bei der ebenfalls über den Mantel eines Rohres verteilt mehrere Transducer vorgesehen sind. Das Dokument befasst sich insbesondere auch mit dem Fall, dass die durchströmende Flüssigkeit die Rohrleitung gar nicht vollständig bis ganz nach oben füllt.

Die EP 0 012 058 A1 offenbart eine Ultraschallflussmessvorrichtung, bei der zwei Ultraschallmessstrecken in einem Winkel von 180° versetzt zueinander verlaufend angeordnet sind. Der Effekt von Messabweichungen aufgrund einer Verschiebung der mittleren Strömungsrichtung bezüglich der Rohrachse wird hierbei durch eine Mittelwertbildung der Laufzeitdifferenzen dieser beiden Ultraschallmessstrecken bestimmt.

Aus der US 2015/268077 A1 und der US 2010/005901 A1 sind jeweils Ultraschalldurchflusszähler mit einem Anschlussgehäuse für den Einbau in ein Versorgungsnetz bekannt, bei denen jeweils eine Mehrzahl von in Längsrichtung des jeweiligen Anschlussgehäuses schräg verlaufenden Messstrecken über den Durchlass des jeweiligen Gehäuses parallel zueinander verlaufend angeordnet sind.

### Aufgabe der vorliegenden Erfindung

Die Aufgabe der vorliegenden Erfindung besteht darin, einen neuartigen Ultraschallfluidzähler zur Verfügung zu stellen, mittels dem ein genaueres Messergebnis bei vereinfachtem Aufbau und verringerten Kosten erzielt werden kann.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Erfindungsgemäß sind bei dem gattungsgemäßen Ultraschallfluidzähler zur Durchfluss- und/oder Volumenbestimmung eines strömenden Mediums bzw. eines Fluids die erste Ultraschallmessstrecke und die zweite Ultraschallmessstrecke jeweils in der Projektionsebene des Durchflussquerschnitts betrachtet winkelig zueinander verlaufend angeordnet und schneiden sich in einem gemeinsamen Bereich. Daraus resultiert der Vorteil, dass das Risiko eines akustischen Übersprechens der beiden Ultraschallmessstrecken minimiert wird und somit die Messgenauigkeit, insbesondere bei gestörten Strömungsprofilen, deutlich gesteigert wird. Zudem wird bei Vorhandensein zweier Messstrecken ein vergrößerter Messbereich innerhalb des Querschnitts des Ultraschallfluidzählers geschaffen, wodurch eine Gewichtung der Ultraschallmessstrecken über den Durchflussquerschnitt des Ultraschallfluidzählers entfällt. Dadurch wird die Berechnung der Messergebnisse der Ultraschallmessstrecken in besonderem Maße vereinfacht.

Erfindungsgemäß liegt der gemeinsame Bereich, jeweils in der Projektionsebene des Durchflussquerschnitts betrachtet, im Bereich der Mittelachse des Gehäuses des Ultraschallfluidzählers, wodurch eine mittenbetonte Vermessung des Querschnitts des Gehäuses erfolgt. Hierdurch kann wahlweise eine sich kreuzende oder eine windschiefe Anordnung der Ultraschallmessstrecken innerhalb des Ultraschallfluidzählers realisiert werden. Durch eine mittenbetonte Vermessung kann die Messgenauigkeit zusätzlich verbessert werden, da innerhalb des mittleren Bereichs des Gehäuses, gerade bei ungestörten Strömungsprofilen, die größte Strömungsgeschwindigkeit herrscht.

Erfindungsgemäß liegt der gemeinsame Bereich im Bereich der Mittelachse des Gehäuses. Hierbei schneiden sich die Ultraschallmessstrecken im Bereich der Gehäusemitte des Ultraschallfluidzählers. Die Messgenauigkeit wird hierdurch noch zusätzlich erhöht.

Ferner kann die erste Ultraschallmessstrecke und die zweite Ultraschallmessstrecke schräg oder diagonal zur Mittelachse des Gehäuses bzw. zur Strömungsrichtung des Mediums verlaufend angeordnet sein. Hierbei können beispielsweise die Ultraschallwandler eines Ultraschallwandlerpaares diagonal gegenüberliegend entlang der Strömungsrichtung bzw. der Flussrichtung des Mediums angeordnet sein. Dadurch kann ein größerer Messbereich im Querschnitt des Ultraschallfluidzählers abgedeckt werden. Zudem wird ein Messprofil durch den Querschnitt des Gehäuses des Ultraschallfluidzählers gelegt, welches sich von einer Wandung des Gehäuses über die Mitte des Querschnitts bis hin zur gegenüberliegenden Wandung des Gehäuses erstreckt. Die Messgenauigkeit wird hierdurch zusätzlich gesteigert, da auch gestörte Strömungsprofile bzw. Strömungsprofilverschiebungen sicher erfasst werden können. Ferner wirken sich selbst größere Strömungsprofilverschiebungen nur mäßig auf das gemittelte Messergebnis aus. Zudem kann durch die winkelige Anordnung der Ultraschallmessstrecken bzw. der Ultraschallwandler ein großer Messbereich des Querschnitts des Ultraschallfluidzählers mit nur wenigen Ultraschallwandlern bzw. Ultraschallmessstrecken abgedeckt werden. Hierdurch können die Herstellungskosten im Vergleich zum Stand der Technik in erheblichem Maße reduziert werden.

Erfindungsgemäß verlaufen die erste und die zweite Ultraschallmessstrecke, in quer zur Längsachse des Gehäuses bzw. zur Strömungsrichtung des Mediums liegenden Projektionsebene betrachtet, winkelig zueinander. Dadurch wird ein Übersprechen der Ultraschallsignale der Ultraschallmessstrecken verhindert. Diese Anordnung der Ultraschallmessstrecken kann beispielsweise durch die bestimmte Positionierung der Ultraschallwandler bzw. der Ultraschallwandlerpaare am Gehäuse des Ultraschallfluidzählers oder durch den Einsatz von Reflektoren bzw. Spiegeln realisiert werden.

Bevorzugt verlaufen die erste und die zweite Ultraschallmessstrecke rechtwinklig (orthogonal) zueinander. Dies kann beispielsweise durch einen Versatz der Ultraschallwandler um 90° entlang des Umfangs des Gehäuses bewerkstelligt werden. Dadurch wird ein maximal großer Messbereich mit vier Ultraschallwandlern abgedeckt.

Alternativ sind auch Ausführungsformen mit mehreren Ultraschallmessstrecken sowie dazugehörigen Ultraschallwandlern bzw. Ultraschallwandlerpaaren denkbar. Beispielsweise können auch drei Ultraschallmessstrecken mit je zwei Ultraschallwandlern vorgesehen sein, wobei die Ultraschallwandler jeweils um 60° entlang des Umfangs des Gehäuses angeordnet sind.

In einfacher Weise können die Ultraschallwandler, z. B. mittels einer Halteeinrichtung, an das Gehäuse des Ultraschallwandlers angebracht werden. Für die Montage der Ultraschallwandler sind vorzugsweise Montagelöcher im Gehäuse des Ultraschallwandlers vorgesehen. Praktischerweise können die Ultraschallwandler mittels Klemm- oder Schraubverbindungen innerhalb der Montagelöcher befestigt werden. Die Verbindung wird hierbei beispielsweise durch O-Ringe, Gewindedichtungen oder dergleichen dichtend hergestellt.

Ferner können sich die Ultraschallwandler bzw. die Gehäuse der Ultraschallwandler nach erfolgter Montage nahezu bündig an die Geometrie des Gehäuses des Ultraschallfluidzählers anschließen. Dadurch wird verhindert, dass sich kritische Hohlräume im Inneren des Ultraschallfluidzählers bilden, die zu einer Luftblasenanlagerung führen können. Eine negative Veränderung des Messergebnisses aufgrund von Verwirbelungen oder Luftblasen kann somit verhindert werden. Alternativ oder zusätzlich können die Ultraschallwandler mit Leitblechen versehen sein, die sich an die Geometrie des Gehäuses anschließen, derart, dass der Durchmesser der Querschnittsfläche des Gehäuses stets konstant bleibt, um Verwirbelungen oder Luftblasenbildungen zu verhindern.

Zweckmäßigerweise kann mindestens eine diffraktive akustische Platte zur Aufspaltung der Ultraschallsignale innerhalb des Gehäuses vorgesehen sein, um den Messbereich innerhalb des Querschnitts des Gehäuses noch zusätzlich zu vergrößern und somit die Messgenauigkeit noch zu steigern.

Vorzugsweise dient das Elektronikmodul zum Erfassen, Speichern und Verarbeiten der Messwerte der Ultraschallmessstrecken bzw. der Ultraschallwandler. Die Messwerte der Ultraschallwandler werden hierbei über Anschlüsse an das Elektronikmodul übermittelt und weiter verarbeitet.

Zweckmäßigerweise kann der Ultraschallfluidzähler als Großwasserzähler mit einem Nenndurchmesser von mindestens 50 mm, insbesondere mindestens 100 mm, insbesondere mindestens 150 mm, vorzugsweise mindestens 200 mm und besonders bevorzugt mindestens 250 mm ausgestaltet sein.

Vorteilhaft kann es sein, die Ultraschallmessstrecken unterschiedlich lang auszugestalten. Dadurch kann die hydraulische Dynamik und die Messgenauigkeit gerade bei niedrigen Strömungsgeschwindigkeiten verbessert werden, da ein größeres Flüssigkeitsvolumen vermessen wird und sich vorhandene Rauschanteile geringer auf das Messergebnis auswirken.

Weiterhin betrifft die vorliegende Erfindung gemäß Anspruch 9 ein Verfahren zur Durchfluss- und/oder Volumenbestimmung eines strömenden Mediums unter Verwendung eines Ultraschallzählers nach einem der Ansprüche 1 bis 8. Hierbei werden die Ultraschallsignale entlang einer ersten Ultraschallmessstrecke abwechselnd von mindestens einem Ultraschallwandler gesendet und empfangen und entlang einer zweiten Ultraschallmessstrecke abwechselnd von mindestens einem Ultraschallwandler gesendet und empfangen. Hierbei können beispielsweise zwei Ultraschallwandler pro Messstrecke eingesetzt werden oder auch ein Ultraschallwandler mit einem dazugehörigen Spiegel bzw. Reflektor. Die Ultraschallsignale durchlaufen hierbei die erste Ultraschallmessstrecke in Strömungsrichtung und entgegen der Strömungsrichtung des Mediums. Ferner wird auch die zweite Ultraschallmessstrecke von Ultraschallsignalen in Strömungsrichtung und entgegen der Strömungsrichtung des Mediums durchlaufen. Hierbei werden jeweils die Laufzeiten sowie die Laufzeitdifferenzen der Ultraschallsignale der ersten Ultraschallmessstrecke und der zweiten Ultraschallmessstrecke ermittelt, wobei die erste Ultraschallmessstrecke und die zweite Ultraschallmessstrecke, jeweils in der Projektionsebene des Durchflussquerschnitts betrachtet, winkelig zueinander verlaufend angeordnet sind und sich in einem gemeinsamen Bereich schneiden.

In vorteilhafter Weise kann anhand der Laufzeiten und/oder der Laufzeitdifferenzen der ersten Ultraschallmessstrecke und der zweiten Ultraschallmessstrecke ein Mittelwert gebildet werden. Dieser Mittelwert kann anschließend zur Durchfluss- und/oder Volumenbestimmung des strömenden Mediums herangezogen werden. Die Messgenauigkeit wird durch diese Mittelwertbildung zusätzlich gesteigert, da auch Messungenauigkeiten einer Ultraschallmessstrecke durch die Mittelwertbildung mit einer zweiten Ultraschallmessstrecke abgemildert werden. Zudem können selbst Strömungsprofilverschiebungen erfasst werden.

Zweckmäßigerweise können die Ultraschallsignale in der ersten und zweiten Ultraschallmessstrecke so abgesandt werden, dass diese den gemeinsamen Bereich nicht zeitgleich durchlaufen. Ein Übersprechen der Ultraschallsignale kann somit ausgeschlossen werden.

Ferner können die Messwerte der Ultraschallmessstrecken einer gemeinsamen elektronischen Messwerterfassung und -auswertung zugeführt werden. Durch den Einsatz eines Elektronikmoduls können Messfehler und/oder Berechnungsfehler erfolgreich vermieden sowie Kosten reduziert werden.

Vorzugsweise können die Ultraschallsignale der Ultraschallmessstrecken im Doppeldurchlauf erfasst werden. Dadurch können auch im Wechsel jeweils mehrere Ultraschallsignale nacheinander von einem ersten zu einem zweiten Ultraschallwandler eines Ultraschallwandlerpaares übertragen werden. Aus diesen Ultraschallsignalen können anschließend ebenfalls Mittelwerte abgeleitet werden. Die Messgenauigkeit wird hierdurch noch zusätzlich verbessert. Zudem kann auch eine Kombination aus Einfach- und Doppeldurchlauf der Ultraschallsignale vorgesehen sein.

Zweckmäßigerweise kann durch die Anordnung der Ultraschallmessstrecken eine mittenbetonte Vermessung des Strömungsprofils realisiert werden. Daraus resultiert der Vorteil, dass sich selbst größere Strömungsprofilverschiebungen nur mäßig auf das gemittelte Messergebnis auswirken.

Bevorzugt ist eine Linearisierung der Messergebnisse über den gesamten Messbereich vorgesehen. Durch diese Linearisierung kann die Messung/Auswertung mittels eines eigenen Kennfelds für alle Ultraschallmessstrecken bzw. für den gesamten Durchflussquerschnitt erzielt werden. Eine Gewichtung der einzelnen Ultraschallsignale bzw. der Ultraschallmessstrecken entfällt. Dadurch kann die Berechnung innerhalb des Elektronikmoduls vereinfacht werden, wodurch Messfehler erfolgreich vermieden werden können. Zudem verringern sich die Herstellungs- und Wartungskosten durch die vereinfachte Programmierung und den vereinfachten Aufbau des Elektronikmoduls.

Erfindungsgemäß ist der Querschnitt des Gehäuses auch derart ausgeformt bzw. ausgestaltetn, dass der Anteil der durch die Ultraschallmessstrecken nicht direkt erfassten Durchströmungsbereiche verringert wird. Daraus resultiert der Vorteil, dass ein noch größerer Strömungsanteil durch die beiden Ultraschallmessstrecken abgedeckt wird. Die Empfindlichkeit gegenüber gestörten Strömungsprofilen lässt sich so weiter verringern und der sogenannte Messeffekt (Wirkungsgrad) weiter verbessern.

Ferner kann zur Laufzeitbestimmung bzw. zur Durchfluss- und/oder Volumenbestimmung eine zusätzliche Betriebsgröße erfasst werden. Die Betriebsgröße kann beispielsweise über zusätzliche Sensoren, vorgefertigte Ablaufpläne im Bereich des Elektronikmoduls oder durch Teile des Ultraschallfluidzählers, wie z. B. den Ultraschallwandlern, erfasst werden. Mittels des Elektronikmoduls kann diese mit in die Laufzeit- und/oder Durchflussberechnung einfließen. Die Laufzeit, der Durchfluss und/oder das Volumen können auf diese Weise noch exakter bestimmt werden.

Zweckmäßigerweise kann es sich bei der zusätzlichen Betriebsgröße um die Temperatur des Mediums handeln, da es durch die Abhängigkeit von Strömungsgeschwindigkeit und Temperatur des Mediums zu Messungenauigkeiten kommen. Die Messgenauigkeit kann dadurch noch zusätzlich erhöht werden.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte Teilquerschnittdarstellung eines Ultraschallfluidzählers gemäß dem Stand der Technik;
- Fig. 2: eine vereinfachte Teilquerschnittdarstellung eines erfindungsgemäßen Ultraschallfluidzählers;
- Fig. 3: eine vereinfachte Querschnittdarstellung in Strömungsrichtung eines Ultraschallfluidzählers mit parallel angeordneten Ultraschallmessstrecken gemäß dem Stand der Technik in der Projektionsebene des Durchflussquerschnitts betrachtet;
- Fig. 4: eine vereinfachte Querschnittdarstellung in Strömungsrichtung eines nicht zur Erfindung gehörigen Ultraschallfluidzählers mit orthogonal zueinander angeordneten Ultraschallmessstrecken in der Projektionsebene des Durchflussquerschnitts betrachtet;
- Fig. 5: eine vereinfachte Darstellung eines laminaren Strömungsprofils innerhalb eines Ultraschallfluidzählers in gestörter sowie ungestörter Form;
- Fig. 6: eine vereinfachte Darstellung eines turbulenten Strömungsprofils innerhalb eines Ultraschallfluidzählers in gestörter sowie ungestörter Form;
- Fig. 7: eine vereinfachte Querschnittdarstellung in Strömungsrichtung des erfindungsgemäßen Ultraschallfluidzählers mit orthogonal zueinander angeordneten Ultraschallmessstrecken und einer erfindungsgemäßen Ausgestaltung des Gehäuses mit verringerter Querschnittsfläche in der Projektionsebene des Durchflussquerschnitts betrachtet;
- Fig. 8: eine stark vereinfachte perspektivische Darstellung einer Ultraschallmessstreckenanordnung innerhalb eines erfindungsgemäßen Ultraschallfluidzählers;
- Fig. 9: eine vereinfachte Teilquerschnittdarstellung des erfindungsgemäßen Ultraschallfluidzählers mit windschiefer Anordnung der Ultraschallmessstrecken;
- Fig. 10: eine stark vereinfachte perspektivische Darstellung einer Ultraschallmessstreckenanordnung innerhalb eines erfindungsgemäßen Ultraschallfluidzählers mit windschiefer Anordnung der Ultraschallmessstrecken, sowie
- Fig. 11: eine vereinfachte Teilquerschnittdarstellung des erfindungsgemäßen Ultraschallfluidzählers mit unterschiedlich langen Ultraschallmessstrecken.

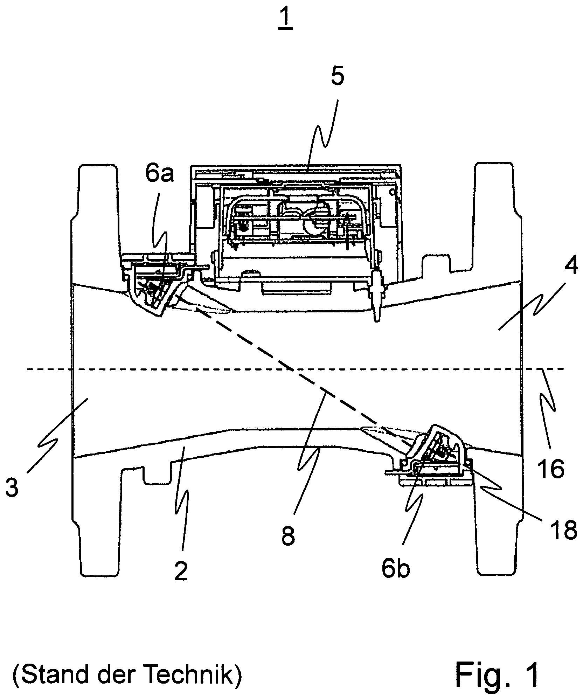

Bezugsziffer 1 in Fig. 1 zeigt eine zweckmäßige Ausgestaltung eines Ultraschallfluidzählers mit diagonal angeordneter Ultraschallmessstrecke 8 in Teilquerschnittdarstellung gemäß dem Stand der Technik. Der Ultraschallfluidzähler 1 umfasst ein Gehäuse 2 (z. B. Anschlussgehäuse) zum Verbau des Ultraschallfluidzählers 1 innerhalb eines in Fig. 1 nicht dargestellten Fluidleitungssystems, z. B. einer Trinkwasserleitung.

Das Gehäuse 2 umfasst einen Einlass 3 und einen Auslass 4. Die Strömungsrichtung des Fluids erfolgt hierbei vom Einlass 3 zum Auslass 4. Innerhalb des Gehäuses 2 befindet sich ein Ultraschallwandlerpaar, welches zwei Ultraschallwandler 6a, 6b umfasst. Die Ultraschallwandler 6a, 6b sind jeweils in einem Ultraschallwandlergehäuse 18 untergebracht. Zwischen den beiden Ultraschallwandlern 6a, 6b befindet sich eine Ultraschallmessstrecke 8 zur Laufzeitermittlung. Durch die Anordnung der beiden Ultraschallwandler 6a, 6b an der oberen und an der unteren inneren Wandung des Gehäuses 2 resultiert eine diagonal ausgerichtete Ultraschallmessstrecke 8 zwischen den beiden Ultraschallwandlern 6a, 6b. Die Ultraschallmessstrecke 8 schneidet hierbei die Mittelachse 16 bzw. die Längsachse des Gehäuses 2 des Ultraschallfluidzählers 1. Die Mittelachse 16 erstreckt sich hierbei in der Regel parallel zur Strömungsrichtung des Mediums vom Einlass 3 zum Auslass 4.

Dadurch, dass das Gehäuseinnere in Strömungsrichtung symmetrisch aufgebaut ist, kann der Ultraschallfluidzähler prinzipiell auch in beide Richtungen mit derselben Genauigkeit messen, d. h. wenn es die Elektronik ermöglicht wäre auch die sogenannte Rückwärtsdurchflussmessung innerhalb der normgerechten Fehlergrenzen problemlos realisierbar.

Für die Durchfluss- und/oder Volumenbestimmung werden abwechselnd Ultraschallsignale, sogenannte Ultraschallbursts 17a, 17b, vom Ultraschallwandler 6a über die Ultraschallmessstrecke 8 zum Ultraschallwandler 6b gesendet und vom Ultraschallwandler 6b über die Ultraschallmessstrecke 8 zum Ultraschallwandler 6a gesendet. Die Ultraschallsignale, die entlang der Ultraschallmessstrecke 8 in Strömungsrichtung des Mediums gesendet werden, durchlaufen die Ultraschallmessstrecke 8 strömungsbedingt schneller als die Ultraschallsignale, die entgegen der Strömungsrichtung des Mediums entlang der Ultraschallmessstrecke 8 gesendet werden. Aus diesen unterschiedlichen Laufzeiten des ersten und des zweiten Ultraschallsignals kann demnach eine Laufzeitdifferenz der Ultraschallsignale ermittelt werden. Die Verarbeitung und Berechnung der Signale und Laufzeiten erfolgen mittels eines Elektronikmoduls 5. Das Elektronikmodul 5 kann anschließend die Laufzeitdifferenz zur Gesamtlaufzeitberechnung bzw. zur Durchfluss- und/oder Volumenbestimmung des strömenden Mediums mit heranziehen.

Zweckmäßigerweise kann die Gesamtlaufzeitberechnung auch auf Basis einer Mittelwertbildung mehrerer Ultraschallmessstrecken erfolgen, um die Messgenauigkeit noch zu steigern. Dies wird durch den Einbau mehrerer Ultraschallwandlerpaare innerhalb eines Ultraschallfluidzählers realisiert. Die Ultraschallwandlerpaare bzw. die Ultraschallmessstrecken werden hierbei in der Regel parallel zueinander angeordnet.

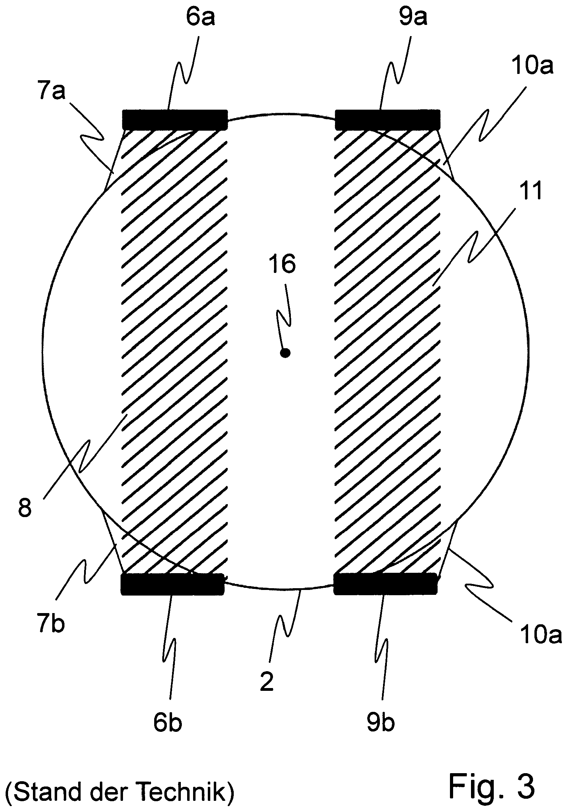

Fig. 3 zeigt eine Querschnittdarstellung eines Gehäuses 2 eines Ultraschallfluidzählers 1 in der Projektionsebene des Durchflussquerschnitts betrachtet bzw. in Blickrichtung entlang der Längs- oder Mittelachse 16 mit zwei parallel zueinander angeordneten Ultraschallmessstrecken 8, 11 gemäß dem Stand der Technik. Fig. 3 verdeutlicht die Probleme der üblichen parallelen Anordnung von zwei Ultraschallmessstrecken 8, 11, wie z. B. die Nichtvermessung der in der Regel maximalen Strömungsgeschwindigkeit im Zentrum der Strömung bzw. des Gehäuses 2. Je nach Strömungsprofilsymmetrie können die beiden Ultraschallmessstrecken 8, 11 extrem große Strömungsprofilunterschiede detektieren, wodurch die Mittelwertbildung ungenauer ausfällt. Insbesondere wird ein Wechsel zwischen laminarer und turbulenter Strömung durch eine derartige Anordnung nur ungenügend exakt erkannt. Zudem kann es bei der parallelen Anordnung der Ultraschallmessstrecken 8, 11 zum akustischen Übersprechen der Ultraschallsignale der beiden Ultraschallmessstrecken 8, 11 kommen, wodurch einerseits die Empfangsamplitude beschnitten wird und andererseits eine resultierende Phasenverschiebung der addierten Einzelsignale Messfehler der Laufzeitdifferenz hervorruft. Zudem ergibt sich ein konstruktiver Nachteil der Ultraschallwandlerpositionierung innerhalb der Strömung, da hier seitliche Taschen bzw. Ausnehmungen 7a, 7b, 10a, 10b zur Unterbringung der Ultraschallwandler 6a, 6b, 9a, 9b vorgesehen sind.

Dadurch kann es zu einer Ausbildung von Tot- bzw. Wirbelzonen im Lee der Ultraschallwandler 6a, 6b, 9a, 9b kommen. Ebenso kann durch die Anordnung der Ultraschallwandler 6a, 6b, 9a, 9b innerhalb der sich ausbildenden Taschen, eine Luftblasenproblematik und/oder eine Schallreflexionen an der metallischen Taschenwand begünstigt werden.

Ferner können durch die parallele Anordnung der Ultraschallmessstrecken 8, 11 Ultraschallwandler-spezifische Nebenschallkeulen in den wandnahen Bereichen der Ultraschallmessstrecken 8, 11 zu unerwünschten Reflexionen an der Wandung des Gehäuses 2 führen. Treffen diese Schallanteile, durch die längere Laufzeit bedingt, zeitverzögert auf den empfangenden Ultraschallwandler kann es durch Interferenzbildung zu Messfehlern kommen.

Ebenso ist aus Fig. 3 ein erheblicher Nachteil hinsichtlich einer Verschmutzung der Ultraschallwandler ersichtlich. Dadurch, dass sich ein Schmutzeintrag in der Regel am Boden innerhalb des Gehäuses 2 des Ultraschallfluidzählers 1 ablagert kann es zu Ausfällen der Ultraschallwandler 6a, 6b, 9a, 9b am Boden und damit zum Ausfall der gesamten Ultraschallmessstrecken 8, 11 und damit des Ultraschallfluidzählers 1 kommen.

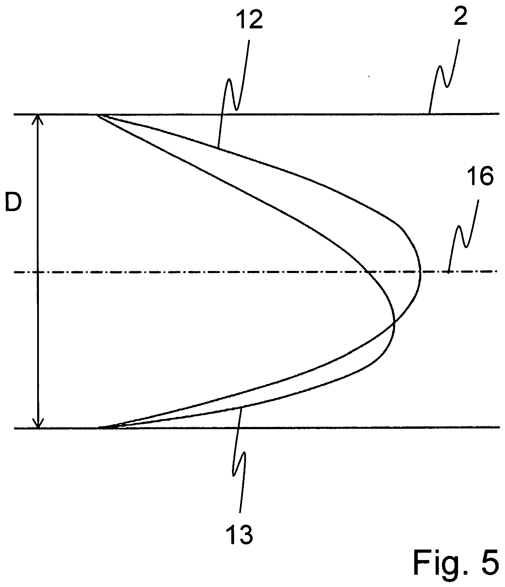

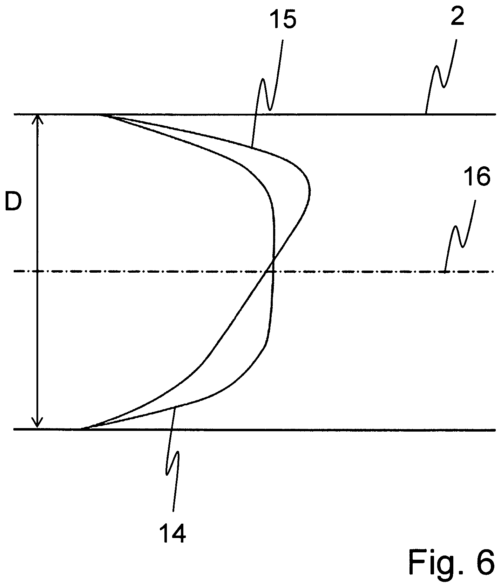

Fig. 5 zeigt ein zu beherrschendes Strömungsprofil bei laminarer Strömung innerhalb des Gehäuses 2 des Ultraschallfluidzählers 1. Das ungestörte laminare Strömungsprofil 12 zeigt hierbei eine symmetrische Verteilung über den gesamten Durchmesser D des Querschnitts des Gehäuses 2, wobei die Strömungsgeschwindigkeit des Fluids in der Mitte des Gehäuses 2 am größten ist und zur Wandung des Gehäuses 2 hin abnimmt. Das laminare gestörte Strömungsprofil 13 hingegen zeigt, dass sich das Maximum der Strömungsgeschwindigkeit aus der Mitte des Gehäuses 2 in Richtung der Wandung des Gehäuses 2 hin verlagert. Derartige gestörte Strömungsprofile können zum Beispiel durch entstehende Luftblasen oder Unebenheiten an der Gehäusewandung verursacht werden. Gestörte Strömungsprofile werden zudem überwiegend auch vor dem Ultraschallfluidzähler im angrenzenden Fluidleitungsnetz erzeugt, z. B. durch Einbauten wie Kugelhähne, Schieber, Blenden oder unterschiedliche Rohrgeometrien wie Raumkrümmer oder Umlenkungen. Ebenso zeigt Fig. 6 das zu beherrschende turbulente ungestörte Strömungsprofil 14 und das turbulente gestörte Strömungsprofil 15.

Durch einen Vergleich der Strömungsprofile in den Fig. 5 und 6 zeigt sich, dass eine mittenbetonte Messung der Strömungsgeschwindigkeit erheblich zur Messgenauigkeit beiträgt, da die maximale Strömungsgeschwindigkeit in der Regel direkt durch die Messstrecke erfasst wird. Ebenso zeigt sich bei gestörten Strömungsprofilen, deren Strömungsmaximum nicht im zentralen Bereich des Gehäusequerschnitts liegt, dass durch die mittenbetonte Vermessung ein zuverlässiger Mittelwert der Strömungsgeschwindigkeit gemessen werden kann.

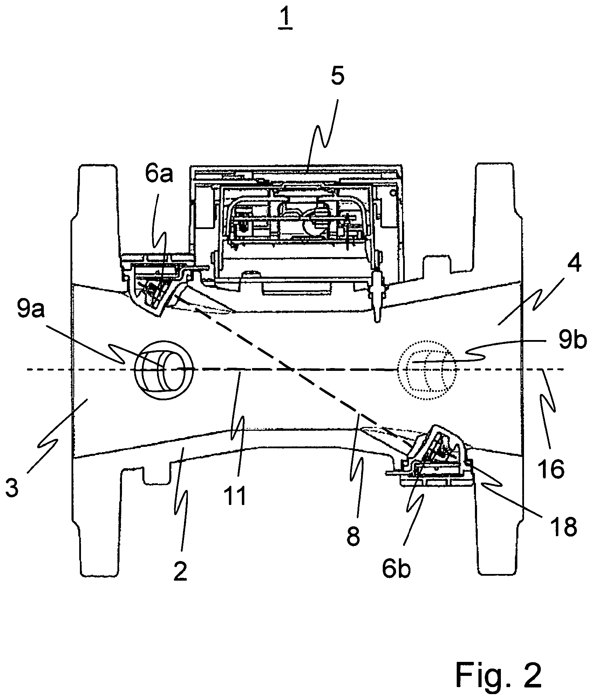

Fig. 2 zeigt eine zweckmäßige Ausgestaltung des erfindungsgemäßen Ultraschallfluidzählers 1. Wie im Folgenden widergegeben werden wird, können die obenstehenden Probleme, die sich gemäß der Ausgestaltung in Fig. 3 ergeben, erfolgreich gelöst werden, wodurch die Messgenauigkeit des Ultraschallfluidzählers 1 zusätzlich verbessert wird. Der Ultraschallfluidzähler 1 in Fig. 2 besitzt im Vergleich zum Ultraschallfluidzähler 1 gemäß Fig. 1 eine zweite zusätzliche Ultraschallmessstrecke 11 innerhalb des Gehäuses 2 mit einem dazugehörigen Ultraschallwandlerpaar. Dadurch wird die Durchfluss- und/oder Volumenbestimmung des strömenden Mediums erheblich verbessert.

Die zweite Ultraschallmessstrecke 11 befindet sich hierbei zwischen den beiden Ultraschallwandlern 9a, 9b. Dadurch, dass sich die Ultraschallwandler 9a, 9b an der linken und an der rechten inneren Wandung des Gehäuses 2 des Ultraschallfluidzählers 1 befinden, ist die Ultraschallmessstrecke 11, ebenso wie die Ultraschallmessstrecke 8, diagonal zwischen den dazugehörigen Ultraschallwandlern 9a, 9b innerhalb des Gehäuses 2 angeordnet. Die beiden Ultraschallmessstrecken 8, 11 sind hierbei winkelig zueinander sowie winkelig zur Mittelachse 16 angeordnet und schneiden sich im Bereich der Mittelachse 16.

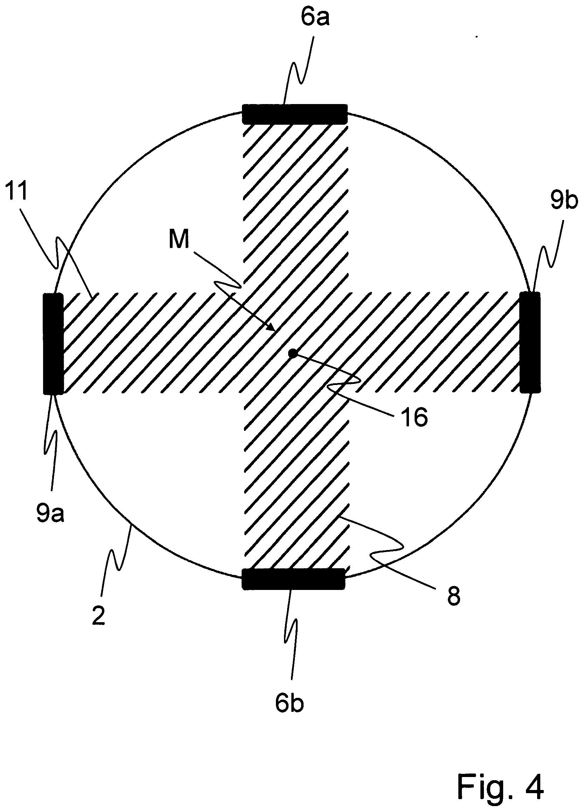

Fig. 4 zeigt eine Darstellung des Gehäusequerschnitts eines nicht zur Erfindung gehörigen Ultraschallfluidzählers 1 in der Projektionsebene des Durchflussquerschnitts betrachtet bzw. in Blickrichtung entlang der Längs- oder Mittelachse 16 in Strömungsrichtung des Mediums. Die Ultraschallmessstrecken 8, 11 liegen bei dieser Projektionsebene im rechten Winkel zueinander und schneiden sich in dem gemeinsamen Bereich M, welcher gleichzeitig die Mitte des Querschnitts des Gehäuses 2 markiert. Die Ultraschallwandler 6a, 6b, 9a, 9b sind in praktischer Weise um 90° versetzt am Umfang des Gehäuses 2 des Ultraschallfluidzählers 1 angeordnet. Durch diese Art der Anordnung kann ein akustisches Übersprechen der Ultraschallsignale der beiden Messstrecken 8, 11 minimiert bzw. beseitigt werden, wodurch die Messgenauigkeit insbesondere auch bei gestörten Strömungsprofilen deutlich gesteigert wird. Durch diese akustisch und hydraulisch optimierte Anordnung der beiden Ultraschallmessstrecken 8, 11 kann eine genauere Mittelwertbildung der Laufzeiten erfolgen.

In vorteilhafter Weise schließen sich die hier vereinfacht dargestellten Ultraschallwandler 6a, 6b, 9a, 9b weitgehend an die Geometrie des Gehäuses 2 an. Dadurch kann die Bildung kritischer Hohlräume und eine Luftblasenanlagerung im Bereich der Ultraschallwandler 6a, 6b, 9a, 9b vermieden werden. Zur Unterstützung des Effekts können zudem im Bereich der Ultraschallwandler 6a, 6b, 9a, 9b (in Fig. 4 nicht dargestellte) Leitbleche oder Leitflächen vorgesehen sein, die derart in das Gehäuses 2 eingefügt sind, dass die Querschnittsfläche des Gehäuses 2 stets konstant bleibt.

Die vier Ultraschallwandler 6a, 6b, 9a, 9b bilden hierbei zwei diagonal in Flussrichtung des Mediums gegenüberstehende Ultraschallmessstrecken 8, 11 aus, die unabhängig voneinander agieren können. Dadurch befinden sich die Mitte des Gehäusequerschnitts sowie vier Randbereiche innerhalb der Ultraschallmessstrecken 8, 11, wodurch eine optimale Vermessung aller wichtigen Strömungsbereiche garantiert wird. Somit können gestörte und ungestörte Strömungsprofile bei laminaren sowie turbulenten Strömungen optimal erfasst werden.

In einfacher Weise berechnet das Elektronikmodul 5 aus den Werten der Ultraschallmessstrecken 8, 11 einen Mittelwert, der für die Durchfluss- und/oder Volumenbestimmung herangezogen wird. Das Erfassen der Werte der unabhängigen Ultraschallmessstrecken 8, 11 kann hierbei entweder zeitgleich oder nacheinander erfolgen. Die Messgenauigkeit und Messstabilität, insbesondere bei der hier dargestellten Verschränkung der zwei Ultraschallmessstrecken 8, 11 um 90° wird somit deutlich verbessert.

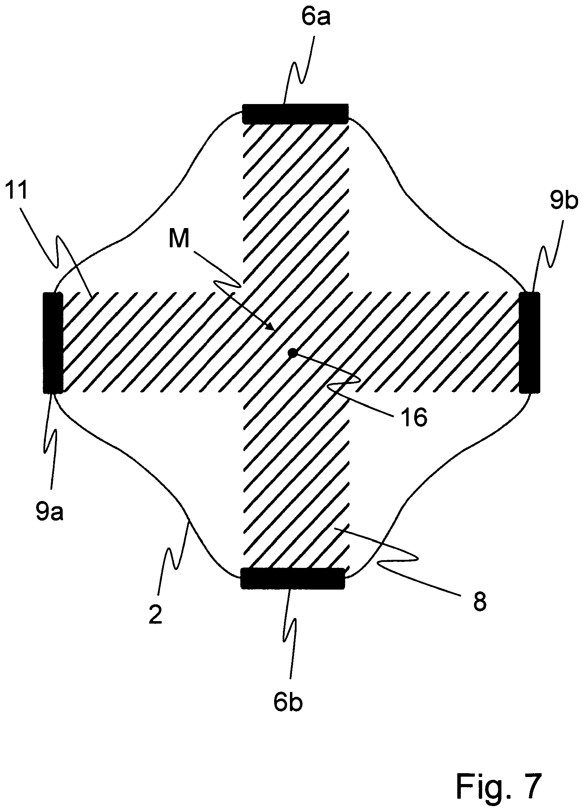

Gemäß einer erfindungsgemäßen Ausgestaltung des Ultraschallfluidzählers in Fig. 7 ist das Gehäuse 2 dermaßen ausgeformt, dass der Querschnitt des Gehäuses 2 derart verkleinert ist, dass der Anteil der durch die Ultraschallmessstrecken 8, 11 nicht erfassten Durchflussbereiche verringert wird. In vorteilhafter Weise wird dadurch der Strömungsanteil der durch beide Ultraschallmessstrecken 8, 11 abgedeckt wird erhöht und somit die Messgenauigkeit verbessert.

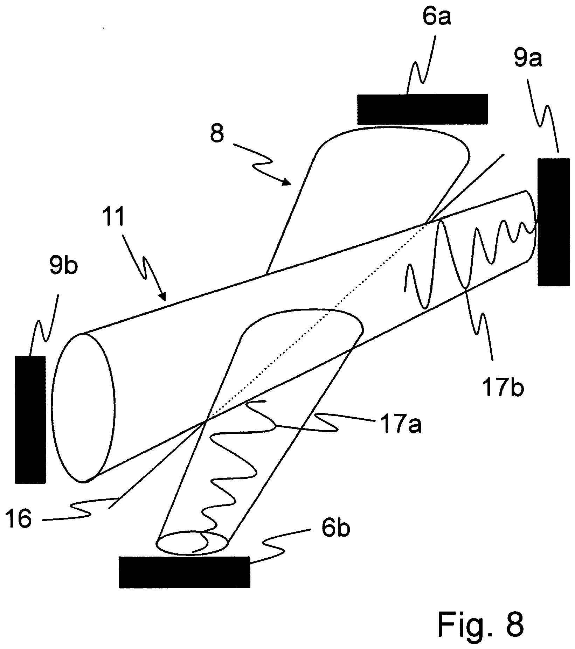

Fig. 8 zeigt eine perspektivische Darstellung einer Ultraschallwandleranordnung mit vier Ultraschallwandlern 6a, 6b, 9a, 9b und zwei Ultraschallmessstrecken 8, 11. Die Ultraschallwandler senden hierbei Ultraschallsignale bzw. Ultraschallbursts 17a, 17b entlang der Ultraschallmessstrecken 8, 11 aus. Die erste Ultraschallmessstrecke 8 und die zweite Ultraschallmessstrecke 11 sind zueinander winkelig verlaufend angeordnet und schneiden sich im Bereich der Mittelachse 16 bzw. im Bereich der Längsachse des Gehäuses 2. Die erste Ultraschallmessstrecke 8 und die zweite Ultraschallmessstrecke 11 sind schräg bzw. diagonal zur Mittelachse 16 des Gehäuses 2 verlaufend angeordnet.

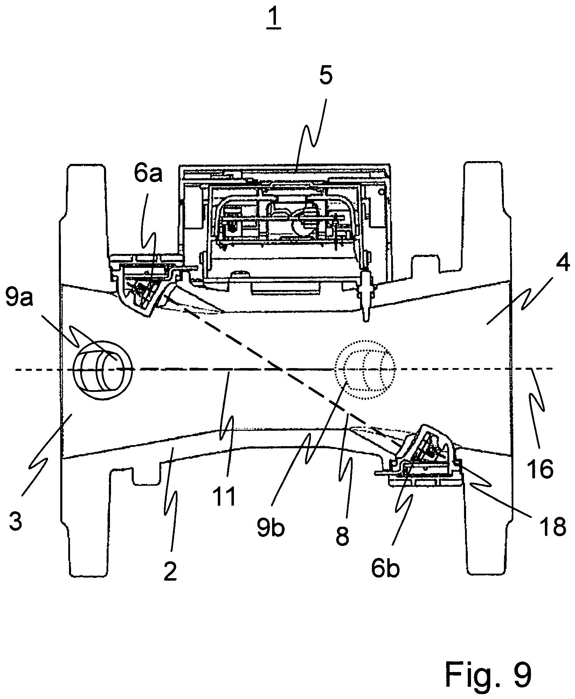

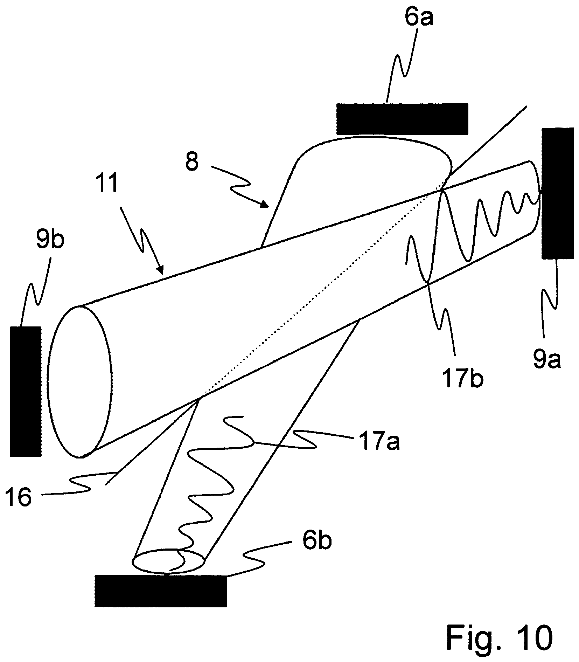

Fig. 9 zeigt eine alternative Ausgestaltung des erfindungsgemäßen Ultraschallfluidzählers 1 mit einer windschiefen Anordnung der Ultraschallmessstrecken 8, 11. Die Ultraschallwandler 6a, 9a und 6b, 9b sind hierbei zusätzlich entlang der Längsachse des Gehäuses 2 versetzt angeordnet. In der Projektionsebene des Durchflussquerschnitts betrachtet bleibt die winkelige Anordnung der Ultraschallmessstrecken 8, 11 gemäß Fig. 4 unverändert, d. h. die Ultraschallmessstrecken 8, 11 schneiden sich hier in einem gemeinsamen Bereich M, obwohl die Ultraschallmessstrecken 8, 11 windschief zueinander angeordnet sind und sich, wie in Fig. 10 dargestellt, tatsächlich nicht schneiden. Durch diese Möglichkeit einer windschiefen Anordnung der Ultraschallmessstrecken 8, 11 innerhalb des Ultraschallfluidzählers 1 kann die Positionierung der Ultraschallwandler 6a, 6b, 9a, 9b individuell an die Gehäusegeometrie angepasst werden.

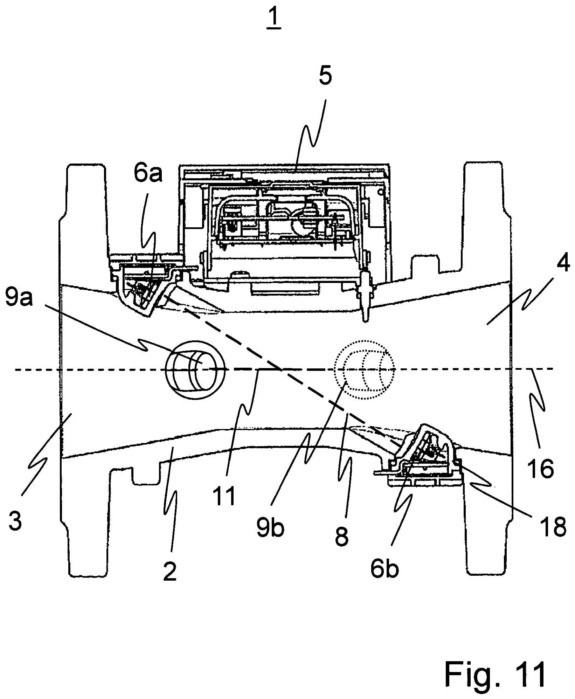

Eine weitere zweckmäßige Ausgestaltung resultiert daraus, dass der Ultraschallfluidzähler 1, gemäß Fig. 11, unterschiedlich lang ausgestaltete Ultraschallmessstrecken 8, 11 aufweist. Dadurch wird die Laufzeitdifferenz verringert und somit auch der Messeffekt gegenüber der ursprünglich längeren Ultraschallmessstrecke 11. Jedoch begrenzt oftmals die Frequenz des Ultraschallsignals die maximal elektronische Messdynamik, da z. B. gewisse Laufzeitdifferenzmessprinzipien eine Zeitdifferenzmessung nur im Bereich einer Periode eines Messbursts erlauben. Die Verwendung zweier unterschiedlich langer Ultraschallmessstrecken 8, 11 ermöglicht daher die Vergrößerung der hydraulischen Dynamik trotz der eingeschränkten elektronischen Dynamik des Rechenwerks. Jedoch müssen die Ultraschallmessstrecken 8, 11 getrennt voneinander über Kennfelder linearisiert werden. Durch das Verkürzen der Ultraschallmessstrecke 11 wird z. B. der Durchschallungswinkel vergrößert. Ein Verkürzen einer Ultraschallmessstrecke 11 kann z. B. auch dadurch erfolgen, dass einer oder beide der Ultraschallwandler 9a, 9b weiter ins Innere des Gehäuses 2 ragt bzw. ragen.

Alternativ oder zusätzlich kann auch ein (nicht dargestellter) Temperatursensor zur Temperaturerfassung vorgesehen sein. Dieser Temperaturwert kann dem Elektronikmodul 5 zugeführt werden und mit in die Laufzeitberechnung, als sogenannte Korrekturgröße, einfließen. Zudem können auch die Ultraschallwandler 6a, 6b, 9a, 9b selbst zur Temperaturbestimmung dienen.

Ferner können auch andere Betriebsgrößen der Ultraschallwandler 6a, 6b, 9a, 9b, wie z. B. Resonanzverhalten, Strom, Spannung, Impedanz, Kapazität oder daraus ableitbare Werte, erfasst und zur Laufzeitberechnung herangezogen werden.

Im Vergleich zur Ausgestaltung gemäß dem Stand der Technik Fig. 3 zeigt die Ausgestaltung in Fig. 4 einen zusätzlichen Vorteil in Bezug auf die Verschmutzung des Gehäuses 2 des Ultraschallfluidzählers 1. Dadurch, dass der Schmutzeintrag in der Regel am Boden des Gehäuses 2 sedimentiert, wird lediglich der untere Ultraschallwandler 6b der Ultraschallmessstrecke 8 beeinträchtigt. Im Falle eines Ausfalls des Ultraschallwandlers 6b und damit der Ultraschallmessstrecke 8, kann dennoch eine Durchflussmessung mittels der Ultraschallmessstrecke 11 erfolgen, da sich beide Ultraschallwandler 9a, 9b der Ultraschallmessstrecke 11 auf etwa mittlerer Höhe des Gehäuses 2 befinden. Ein Ausfall der Ultraschallmessstrecke 11 aufgrund von Schmutzeintrag ist daher unwahrscheinlich.

### BEZUGSZEICHENLISTE

- 1: Ultraschallfluidzähler
- 2: Gehäuse
- 3: Einlass
- 4: Auslass
- 5: Elektronikmodul
- 6a: Ultraschallwandler
- 6b: Ultraschallwandler
- 7a: Ausnehmung
- 7b: Ausnehmung
- 8: Ultraschallmessstrecke
- 9a: Ultraschallwandler
- 9b: Ultraschallwandler
- 10a: Ausnehmung
- 10b: Ausnehmung
- 11: Ultraschallmessstrecke
- 12: laminares Strömungsprofil ungestört
- 13: laminares Strömungsprofil gestört
- 14: turbulentes Strömungsprofil ungestört
- 15: turbulentes Strömungsprofil gestört
- 16: Mittelachse
- 17a: Ultraschallburst
- 17b: Ultraschallburst
- 18: Ultraschallwandlergehäuse

- D: Durchmesser des Querschnitts des Gehäuses
- M: gemeinsamer Bereich

## Patentansprüche

1. Ultraschallfluidzähler (1) zur Durchfluss- und/oder Volumenbestimmung eines strömenden Mediums, mit
einem Gehäuse (2),
einem Einlass (3),
einem Auslass (4),
einer mindestens einen Ultraschallwandler (6a) umfassenden ersten Ultraschallmessstrecke (8), sowie
einer mindestens einen Ultraschallwandler (9a) umfassenden zweiten Ultraschallmessstrecke (11), wobei
die Ultraschallmessstrecken (8, 11) innerhalb des Gehäuses (2) in einem Winkel zueinander verlaufend angeordnet sind und sich schneiden, jeweils in der Projektionsebene des Durchflussquerschnitts betrachtet die erste Ultraschallmessstrecke (8) und die zweite Ultraschallmessstrecke (11) winkelig zueinander verlaufend angeordnet sind und sich in einem gemeinsamen Bereich M schneiden,
jeweils in der Projektionsebene des Durchflussquerschnitts betrachtet der gemeinsame Bereich M im Bereich der Mittelachse (16) des Gehäuses (2) liegt und
**dadurch gekennzeichnet, dass**
in der Projektionsebene des Durchflussquerschnitts betrachtet der Querschnitt des Gehäuses (2) derart ausgestaltet ist, dass der Anteil der durch die Ultraschallmessstrecken (8, 11) nicht direkt erfassten Bereiche im Vergleich zu einem Querschnitt eines Gehäuses mit durch Ultraschallmessstrecken nicht direkt erfassten Bereichen mit einer kreisförmigen Außenkontur verringert ist.

2. Ultraschallfluidzähler nach mindestens einem der vorhergehenden Ansprüche, **dadurch gekennzeichnet, dass** die erste Ultraschallmessstrecke (8) und die zweite Ultraschallmessstrecke (11) schräg zur Mittelachse (16) des Gehäuses (2) verlaufend angeordnet sind.

3. Ultraschallfluidzähler nach mindestens einem der vorhergehenden Ansprüche, **dadurch gekennzeichnet, dass** in einer quer zur Mittelachse (16) des Gehäuses (2) liegenden Projektionsebene betrachtet die erste und die zweite Ultraschallmessstrecke (8, 11) winkelig zueinander verlaufen.

4. Ultraschallfluidzähler nach Anspruch 3, **dadurch gekennzeichnet, dass** die erste und die zweite Ultraschallmessstrecke (8, 11) rechtwinklig (orthogonal) zueinander verlaufen.

5. Ultraschallfluidzähler nach mindestens einem der vorhergehenden Ansprüche, **dadurch gekennzeichnet, dass** im Bereich der Ultraschallwandler (6a, 6b, 9a, 9b) Leitbleche vorgesehen sind.

6. Ultraschallfluidzähler nach mindestens einem der vorhergehenden Ansprüche, **dadurch gekennzeichnet, dass** im Bereich der Ultraschallmessstrecke (8, 11) eine diffraktive akustische Platte zur Aufspaltung der Ultraschallsignale vorgesehen ist.

7. Ultraschallfluidzähler nach mindestens einem der vorhergehenden Ansprüche, **dadurch gekennzeichnet, dass** ein Elektronikmodul (5) zum Erfassen, Speichern und Verarbeiten der Messwerte der Ultraschallmessstrecken (8, 11) vorgesehen ist.

8. Ultraschallfluidzähler nach mindestens einem der vorhergehenden Ansprüche, **dadurch gekennzeichnet, dass** die Ultraschallmessstrecken (8, 11) unterschiedlich lang sind.

9. Verfahren zur Durchfluss- und/oder Volumenbestimmung eines strömenden Mediums unter Verwendung eines Ultraschallfluidzähler (1) nach einem der vorhergehenden Ansprüche, wobei
- Ultraschallsignale entlang der ersten Ultraschallmessstrecke (8) abwechselnd von mindestens einem Ultraschallwandler (6a bzw. 6b) gesendet und empfangen werden,
- Ultraschallsignale entlang der zweiten Ultraschallmessstrecke (11) abwechselnd von mindestens einem Ultraschallwandler (9a bzw. 9b) gesendet und empfangen werden,
- die Ultraschallsignale die erste Ultraschallmessstrecke (8) in Strömungsrichtung und entgegen der Strömungsrichtung des Mediums durchlaufen,
- die Ultraschallsignale die zweite Ultraschallmessstrecke (11) in Strömungsrichtung und entgegen der Strömungsrichtung des Mediums durchlaufen,
- jeweils die Laufzeiten sowie die Laufzeitdifferenzen der Ultraschallsignale in der ersten Ultraschallmessstrecke (8) und der zweiten Ultraschallmessstrecke (11) ermittelt werden, wobei
- jeweils in der Projektionsebene des Durchflussquerschnitts betrachtet die erste Ultraschallmessstrecke (8) und die zweite Ultraschallmessstrecke (11) winkelig zueinander verlaufend angeordnet sind und sich in einem gemeinsamen Bereich M schneiden.

10. Verfahren nach Anspruch 9, **dadurch gekennzeichnet, dass** anhand der Laufzeiten und/oder der Laufzeitdifferenzen der ersten Ultraschallmessstrecke (8) und der zweiten Ultraschallmessstrecke (11) ein Mittelwert gebildet wird, und der Mittelwert zur Durchfluss- und/oder Volumenbestimmung des strömenden Mediums herangezogen wird.

11. Verfahren nach Anspruch 9 oder 10 **dadurch gekennzeichnet, dass** die Ultraschallsignale in der ersten und zweiten Ultraschallmessstrecke (8, 11) so abgesandt werden, dass diese den gemeinsamen Bereich M nicht zeitgleich durchlaufen.

12. Verfahren nach mindestens einem der Ansprüche 9 bis 11, **dadurch gekennzeichnet, dass** die Messwerte der Ultraschallmessstrecken (8, 11) einer gemeinsamen elektronischen Messwerterfassung und -auswertung zugeführt werden.

13. Verfahren nach mindestens einem der Ansprüche 9 bis 12, **dadurch gekennzeichnet, dass** die Ultraschallsignale der Ultraschallmessstrecken (8, 11) in Einfach- und/oder Doppeldurchlauf erfasst werden.

14. Verfahren nach mindestens einem der Ansprüche 9 bis 13, **dadurch gekennzeichnet, dass** eine Linearisierung der Messergebnisse über den gesamten Messbereich vorgesehen ist.

## Claims

1. Ultrasonic fluid meter (1) for determining the flow rate and/or volume of a flowing medium, having
a housing (2),
an inlet (3),
an outlet (4),
an ultrasound measurement path (8) comprising at least one ultrasound transducer (6a), and
a second ultrasound measurement path (11) comprising at least one ultrasound transducer (9a), wherein
the ultrasound measurement paths (8, 11) are arranged extending at an angle to one another inside the housing (2) and intersect,
respectively as seen in the projection plane of the flow cross section, the first ultrasound measurement path (8) and the second ultrasound measurement path (11) are arranged extending at an angle to one another and intersect in a common region M,
respectively as seen in the projection plane of the flow cross section, the common region M lies in the region of the mid-axis (16) of the housing (2), and
**characterized in that**
as seen in the projection plane of the flow cross section, the cross section of the housing (2) is configured in such a way that the proportion of the regions not directly recorded by the ultrasound measurement paths (8, 11) is reduced in comparison with a cross section of a housing having regions which are not directly recorded by ultrasound measurement paths and have a circular outer contour.

2. Ultrasonic fluid meter according to at least one of the preceding claims, **characterized in that** the first ultrasound measurement path (8) and the second ultrasound measurement path (11) are arranged extending obliquely with respect to the mid-axis (16) of the housing (2).

3. Ultrasonic fluid meter according to at least one of the preceding claims, **characterized in that**, as seen in a projection plane lying transversely with respect to the mid-axis (16) of the housing (2), the first and second ultrasound measurement paths (8, 11) extend at an angle to one another.

4. Ultrasonic fluid meter according to Claim 3, **characterized in that** the first and second ultrasound measurement paths (8, 11) extend at a right angle (orthogonally) to one another.

5. Ultrasonic fluid meter according to at least one of the preceding claims, **characterized in that** guide plates are provided in the region of the ultrasound transducers (6a, 6b, 9a, 9b) .

6. Ultrasonic fluid meter according to at least one of the preceding claims, **characterized in that** a diffractive acoustic plate for splitting the ultrasound signals is provided in the region of the ultrasound measurement path (8, 11).

7. Ultrasonic fluid meter according to at least one of the preceding claims, **characterized in that** an electronic module (5) for recording, storing and processing the measurement values of the ultrasound measurement paths (8, 11) is provided.

8. Ultrasonic fluid meter according to at least one of the preceding claims, **characterized in that** the ultrasound measurement paths (8, 11) are of different lengths.

9. Method for determining the flow rate and/or volume of a flowing medium using an ultrasonic fluid meter (1) according to one of the preceding claims, wherein
- ultrasound signals are emitted and received alternately by at least one ultrasound transducer (6a or 6b) along the first ultrasound measurement path (8),
- ultrasound signals are emitted and received alternately by at least one ultrasound transducer (9a or 9b) along the second ultrasound measurement path (11),
- the ultrasound signals travel along the first ultrasound measurement path (8) in the flow direction and counter to the flow direction of the medium,
- the ultrasound signals travel along the second ultrasound measurement path (11) in the flow direction and counter to the flow direction of the medium,
- the times of flight and the time-of-flight differences of the ultrasound signals in the first ultrasound measurement path (8) and the second ultrasound measurement path (11) are respectively determined, wherein,
- respectively as seen in the projection plane of the flow cross section, the first ultrasound measurement path (8) and the second ultrasound measurement path (11) are arranged extending at an angle to one another and intersect in a common region M.

10. Method according to Claim 9, **characterized in that** an average value is formed with the aid of the times of flight and/or the time-of-flight differences of the first ultrasound measurement path (8) and the second ultrasound measurement path (11), and the average value is used for determining the flow rate and/or volume of the flowing medium.

11. Method according to Claim 9 or 10, **characterized in that** the ultrasound signals are emitted in the first and second ultrasound measurement paths (8, 11) in such a way that they do not pass through the common region M simultaneously.

12. Method according to at least one of Claims 9 to 11, **characterized in that** the measurement values of the ultrasound measurement paths (8, 11) are delivered to a common electronic measurement-value recording and evaluation unit.

13. Method according to at least one of Claims 9 to 12, **characterized in that** the ultrasound signals of the ultrasound measurement paths (8, 11) are recorded in single and/or double transit.

14. Method according to at least one of Claims 9 to 13, **characterized in that** linearization of the measurement results over the entire measurement region is provided.

## Revendications

1. Compteur de fluide à ultrasons (1) permettant de déterminer le débit et/ou le volume d'un milieu en écoulement, comprenant
un boîtier (2),
une entrée (3),
une sortie (4),
une première section de mesure à ultrasons (8) comprenant au moins un transducteur à ultrasons (6a), et
une deuxième section de mesure à ultrasons (11) comprenant au moins un transducteur à ultrasons (9a), dans lequel
les sections de mesure à ultrasons (8, 11) sont disposées à l'intérieur du boîtier (2) en s'étendant selon un angle l'une par rapport à l'autre et se coupent, vues respectivement dans le plan de projection de la section de passage, la première section de mesure à ultrasons (8) et la deuxième section de mesure à ultrasons (11) sont disposées en s'étendant angulairement l'une par rapport à l'autre et se coupent dans une zone commune M,
vue respectivement dans le plan de projection de la section de passage, la zone commune M se situe au niveau de l'axe médian (16) du boîtier (2), et
**caractérisé en ce que**, vue dans le plan de projection de la section de passage, la section transversale du boîtier (2) est configurée de telle sorte que la proportion des zones non détectées directement par les sections de mesure à ultrasons (8, 11) est diminuée en comparaison avec une section transversale d'un boîtier ayant des zones non détectées directement par les sections de mesure à ultrasons à contour extérieur circulaire.

2. Compteur de fluide à ultrasons selon au moins l'une des revendications précédentes, **caractérisé en ce que** la première section de mesure à ultrasons (8) et la deuxième section de mesure à ultrasons (11) sont disposées en s'étendant obliquement par rapport à l'axe médian (16) du boîtier (2).

3. Compteur de fluide à ultrasons selon au moins l'une des revendications précédentes, **caractérisé en ce que** vues dans un plan de projection situé transversalement à l'axe médian (16) du boîtier (2), la première et la deuxième section de mesure à ultrasons (8, 11) s'étendent angulairement l'une par rapport à l'autre.

4. Compteur de fluide à ultrasons selon la revendication 3, **caractérisé en ce que** la première et la deuxième section de mesure à ultrasons (8, 11) s'étendent à angle droit (orthogonalement) l'une par rapport à l'autre.

5. Compteur de fluide à ultrasons selon au moins l'une des revendications précédentes, **caractérisé en ce que** des déflecteurs sont prévus au niveau des transducteurs à ultrasons (6a, 6b, 9a, 9b).

6. Compteur de fluide à ultrasons selon au moins l'une des revendications précédentes, **caractérisé en ce qu'**un panneau acoustique à diffraction est prévu au niveau de la section de mesure à ultrasons (8, 11) pour séparer les signaux ultrasonores.

7. Compteur de fluide à ultrasons selon au moins l'une des revendications précédentes, **caractérisé en ce qu'**un module électronique (5) est prévu pour détecter, stocker et traiter les valeurs de mesure des sections de mesure à ultrasons (8, 11).

8. Compteur de fluide à ultrasons selon au moins l'une quelconque des revendications précédentes, **caractérisé en ce que** les sections de mesure à ultrasons (8, 11) sont de longueur différente.

9. Procédé permettant de déterminer le débit et/ou le volume d'un fluide en écoulement en utilisant un compteur de fluide à ultrasons (1) selon l'une quelconque des revendications précédentes, dans lequel
- des signaux ultrasonores sont envoyés et reçus sur la première section de mesure à ultrasons (8) en alternance par au moins un transducteur à ultrasons (6a ou 6b),
- des signaux ultrasonores sont envoyés et reçus sur la deuxième section de mesure à ultrasons (11) en alternance par au moins un transducteur à ultrasons (9a ou 9b),
- les signaux ultrasonores parcourent la première section de mesure à ultrasons (8) dans la direction d'écoulement et à l'opposé de la direction d'écoulement du milieu,
- les signaux ultrasonores parcourent la deuxième section de mesure à ultrasons (11) dans la direction d'écoulement et à l'opposé de la direction d'écoulement du fluide,
- respectivement les temps de propagation ainsi que les différences de temps de propagation des signaux ultrasonores dans la première section de mesure à ultrasons (8) et la deuxième section de mesure à ultrasons (11) sont établis, dans lequel
- vues respectivement dans le plan de projection de la section de passage, la première section de mesure à ultrasons (8) et la deuxième section de mesure à ultrasons (11) s'étendent angulairement l'une par rapport à l'autre et se coupent dans une zone commune M.

10. Procédé selon la revendication 9, **caractérisé en ce qu'**à l'aide des temps de propagation et/ou des différences de temps de propagation de la première section de mesure à ultrasons (8) et de la deuxième section de mesure à ultrasons (11), une moyenne est établie, et la moyenne est utilisée pour déterminer le débit et/ou le volume du milieu en écoulement.

11. Procédé selon la revendication 9 ou 10, **caractérisé en ce que** les signaux ultrasonores dans la première et la deuxième section de mesure à ultrasons (8, 11) sont émis de telle sorte qu'ils ne parcourent pas en même temps la zone commune M.

12. Procédé selon au moins l'une des revendications 9 à 11, **caractérisé en ce que** les valeurs de mesure des sections de mesure à ultrasons (8, 11) sont amenées à une détection et évaluation de valeurs de mesure électronique commune.

13. Procédé selon au moins l'une des revendications 9 à 12, **caractérisé en ce que** les signaux ultrasonores des sections de mesure à ultrasons (8, 11) sont détectés en un passage simple et/ou double.

14. Procédé selon au moins l'une des revendications 9 à 13, **caractérisé en ce qu'**une linéarisation des résultats de mesure sur toute la plage de mesure est prévue.
